(19) Europäisches Patentamt
European Patent Office
Office européen des brevets

(11) Veröffentlichungsnummer: **0 027 230**
**B1**

(12) **EUROPÄISCHE PATENTSCHRIFT**

(45) Veröffentlichungstag der Patentschrift: **23.03.83**

(51) Int. Cl.³: **C 07 F 9/165**

(21) Anmeldenummer: **80106040.1**

(22) Anmeldetag: **06.10.80**

(54) **Verfahren zur Herstellung von Thiophosphorsäureestern.**

(30) Priorität: **13.10.79 DE 2941587**

(43) Veröffentlichungstag der Anmeldung: **22.04.81 Patentblatt 81/16**

(45) Bekanntmachung des Hinweises auf die Patenterteilung: **23.03.83 Patentblatt 83/12**

(84) Benannte Vertragsstaaten: **BE CH DE FR GB IT LI NL**

(56) Entgegenhaltungen:
**DE-A-2 022 207**
**DE-B-1 116 217**
**DE-C-830 509**
**US-A-3 829 535**

(73) Patentinhaber: **BAYER AG, Zentralbereich Patente, Marken und Lizenzen, D-5090 Leverkusen 1, Bayerwerk (DE)**

(72) Erfinder: **Feyen, Peter, Dr., Mozartstrasse 1, D-4020 Mettmann (DE)**
Erfinder: **Schmidt, Friedrich, Dr., In den Birken 77, D-5600 Wuppertal 1 (DE)**

**EP 0 027 230 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Thiophosphorsäureestern

Die Erfindung betrifft ein neues Verfahren zur Herstellung bekannter Thiophosphorsäureester, die als Insektizide und Akarizide mit systemischer Wirkung Verwendung finden oder als Ausgangsstoffe zur Herstellung chemischer Verbindungen eingesetzt werden, die eine ähnliche Wirkung zeigen.

In DE-B-1 116 217, DE-C-830 509, US-A-2 952 700 und US-A-3 829 535 werden ähnliche Verfahren (mit zum Teil anderer Zielsetzung) beschrieben. Dieser Stand der Technik liefert jedoch keine Anhaltspunkte dafür, daß die spezielle Kombination bestimmter Verfahrensmaßnahmen zu den günstigen Ergebnissen des erfindungsgemäßen Verfahrens führen würde.

Die erfindungsgemäß erhältlichen Verbindungen können durch folgende allgemeine Formel (I) beschrieben werden:

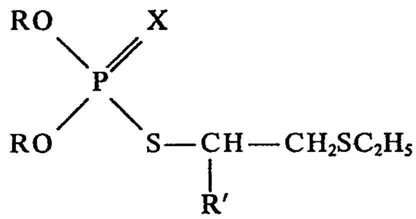
bzw.
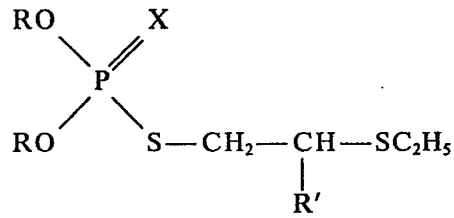
(I)

R = Alkyl,
R' = H, Alkyl,
X = S, O

z. B.

Ia $R = CH_3$, $R' = H$, $X = O$
Ib $R = CH_3$, $R' = H$, $X = S$
Ic $R = C_2H_5$, $R' = H$, $X = S$
Id $R = CH_3$, $R' = CH_3$, $X = O$

Der bisher wahrscheinlich beste Weg zur Herstellung dieser Verbindungen sei am folgenden Beispiel beschrieben:

1.
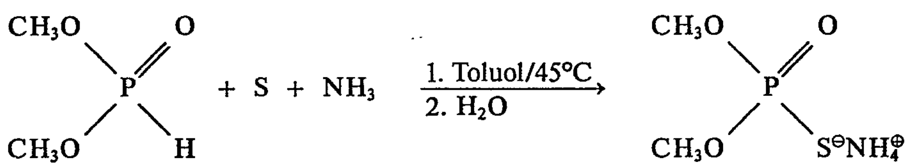


ca. 40%ig in Wasser
Ausbeute 95%
Toluol erneut einsetzen

2. $HOC_2H_4SC_2H_5 + PCl_3 \longrightarrow Cl-C_2H_4SC_2H_5 + (PCl_3) + P(OH)_3$

(Überschuß) Ausbeute ca. 90–95%

3.
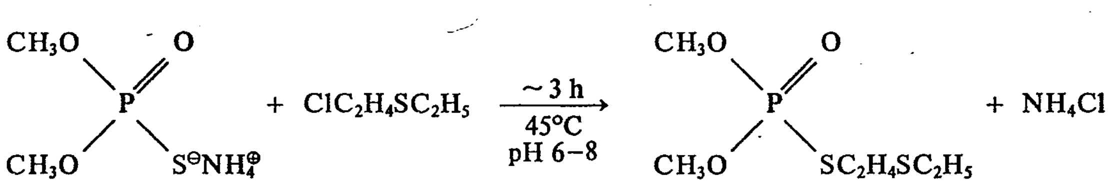


aus Stufe 1 (Überschuß) aus Stufe 2 Ausbeute ca. 83% bezogen auf Alkohol in Stufe 2.

Die einzelnen Stufen sind an folgenden Stellen beschrieben:

1. Stufe Houben – Weyl, Bd. 12/II, 602, 603, DE-PS 835 145
2. Stufe Houben – Weyl, Bd. 5/3

3. Stufe DE-C-836 349, DE-C-830 509, US-A-2 571 989 G. Schrader: Die Entwicklung neuer insektizider Phosphorsäureester, Seite 408 R. Wegler, Chemie der Pflanzenschutz- und Schädlingsbekämpfungsmittel Bd. 1, S. 331 ff, Springer Verlag 1970

Dieses Verfahren weist folgende Nachteile auf:

1. Die Verwendung von Ammoniak (flüssig bzw. gasförmig) stellt ein Sicherheitsrisiko dar.
2. Die aus ökologischen Gründen notwendige Entfernung des gebildeten Ammoniumchlorids aus dem Abwasser ist aufwendig.
3. Die in Stufe 2 anfallende phosphorige Säure (zusammen mit überschüssigem $PCl_3$) gibt erstens Anlaß zu Nebenreaktionen in Stufe 3 und gelangt zweitens zum Schluß ins Abwasser, aus dem es ebenfalls mit hohem Aufwand entfernt werden muß.
4. Hohe Materialkosten durch Einsatz von Phosphortrichlorid und Dimethylthiophosphat im Überschuß und deutliche Nebenproduktbildung.

Es wurde nun gefunden, daß man die Verbindungen der Formel (I), in der R für Alkyl, X für Sauerstoff oder Schwefel und R' für Wasserstoff oder Alkyl steht auch dadurch erhalten kann, daß man Phosphate mit folgender allgemeiner Formel (II)

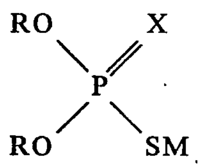

(II)

in der

R Alkyl
X Sauerstoff oder Schwefel und
M ein Kation (außer $NH_4^{\oplus}$) bedeutet,

mit Verbindungen der allgemeinen Formel (III)

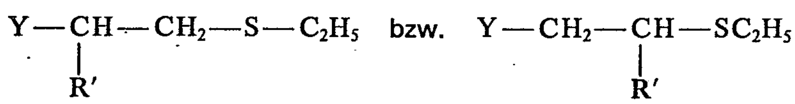

bzw.

(III)

umsetzt, in denen

R' Alkyl oder Wasserstoff und
Y eine Abgangsgruppe ist.

Die Umsetzung findet in einem Wasser enthaltenden heterogenen Reaktionsmedium statt. Der pH-Wert liegt zwischen 5,0 und 7,5. Die Reaktionstemperatur liegt zwischen 45 und 65°C. Die Reaktionszeiten liegen zwischen 30 Minuten und 4 Stunden.

Die Konzentration des eingesetzten Salzes der Formel (II) liegt im Reaktionsmedium zwischen 20–40% zu Beginn der Reaktion. Die Reaktionslösung muß durchgemischt werden.

Die Herstellung der Ausgangsstoffe der Formel (II) und (III) kann nach bekannten Verfahren erfolgen (z. B. R. Wegler, Chemie der Pflanzenschutz- und Schädlingsbekämpfungsmittel Bd. 1, S. 281 ff. oder Houben–Weyl, Bd. 5/3).

In einer speziellen Ausführung des Verfahrens, die ebenfalls Gegenstand der vorliegenden Erfindung ist, werden die Verbindungen der Formel (II), in der R = Alkyl und X = O und M = Kation ist auf folgendem Wege hergestellt:

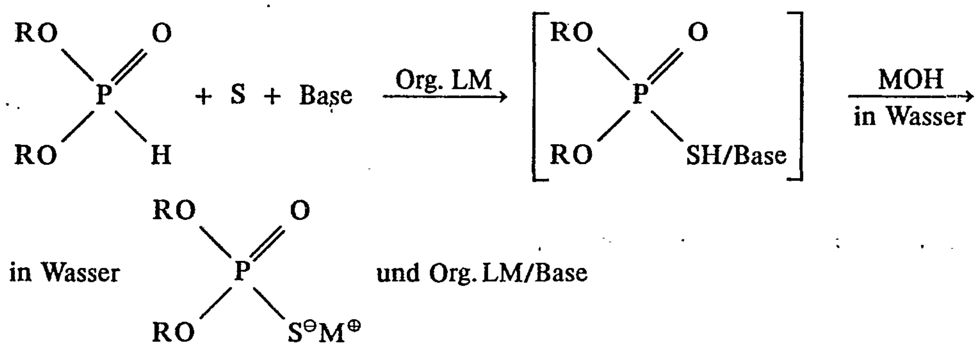

(Org. LM. = organisches Lösungsmittel) M = Metallrest (Alkali- oder Erdalkalimetall, vorzugsweise Na, K). Die organische Phase (Lösungsmittel + Base) wird in einem nächsten Ansatz erneut eingesetzt.

Zur Erfindung gehört schließlich eine Herstellungsvariante für Verbindungen der Formel (III), in der Y = Chlorid und R' = H oder Alkyl bedeutet, dadurch gekennzeichnet, daß man den Alkohol

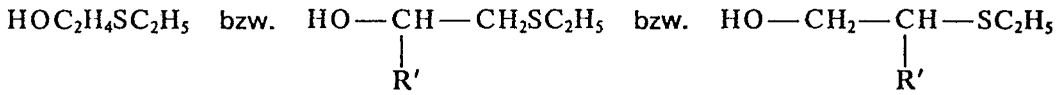


mit Chlorwasserstoff-Gas zur Umsetzung bringt und die Reaktionslösung direkt (ohne Aufarbeitung) in die Endstufe einsetzt.

Je höher dabei die Temperatur des vorgelegten Alkohols ist, desto schneller kann das Gas eingeleitet werden.

Die Reaktionstemperatur beträgt 65–85° C.

Die nach dem erfindungsgemäßen Verfahren hergestellten Verbindungen der Formel (I) entstehen nicht nur in höherer Ausbeute gegenüber den herkömmlichen Verfahren, sondern man erhält gleichzeitig ein Abwasser, das $NH_4Cl$- und $P(OH)_3$-frei ist. Außerdem ist der chemische Sauerstoffbedarf niedriger und die biologische Abbaubarkeit höher als bei Abwässern, die bei den älteren Herstellungsverfahren anfallen.

Schließlich kann jetzt beispielsweise eine oxidative Abwasserbehandlung durchgeführt werden, die bei Ammoniumchlorid-haltigen Abwässern problematisch sein kann. (Bildung explosiver und/oder bakteriotoxischer Oxidationsprodukte des $NH_4Cl$.)

Verwendet man beispielsweise Dimethylphosphit und Ethylthioethanol als Ausgangsstoffe, so kann man die gewünschte Verbindung nach folgendem Schema erhalten:

1. 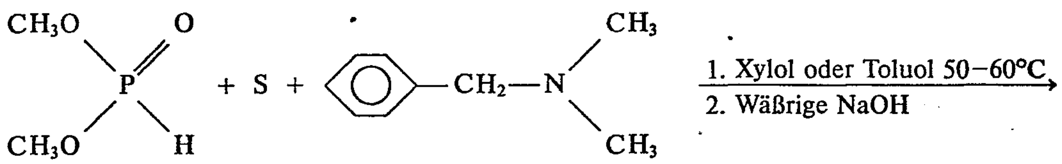


1 : 1 : 1 Mol

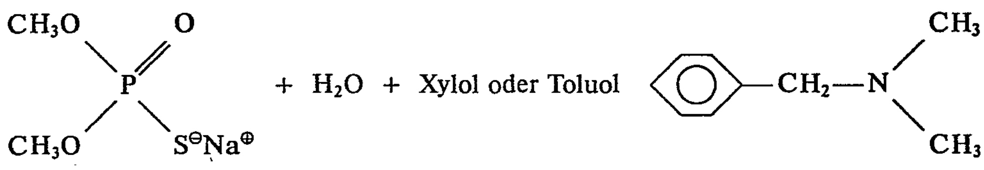


99%

Die organische Phase wird nach azeotroper Trocknung erneut eingesetzt.

2. $HO-C_2H_4SC_2H_5 + HCl\text{-(Gas)} \xrightarrow{65-85°C} Cl-C_2H_4SC_2H_5 + H_2O + HCl$ (aus Überschuß)

1 : 1,15 Mol bis 99%

3. Reaktionslösungen 1 + 2

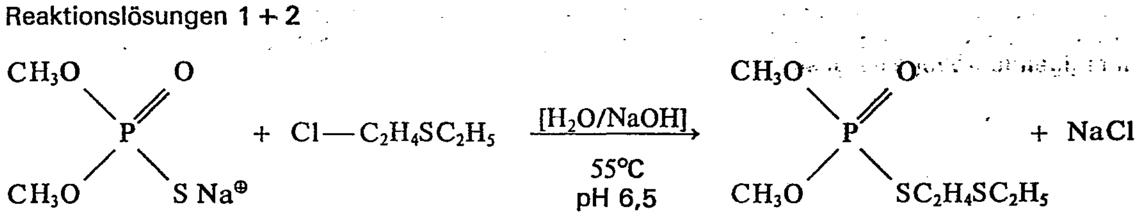


28–33%ig in Wasser — 55 Minuten — 95% bezogen auf Alkohol in Stufe 2

In der Ausgangsverbindung der Formel (II) steht R für Alkyl, vorzugsweise für Methyl- und Ethyl und M für ein Kation, vorzugsweise Natrium- oder Kalium-Ion und X für Schwefel oder Sauerstoff.

Bei der zur Erfindung gehörenden Herstellung wird die Verbindung der Formel

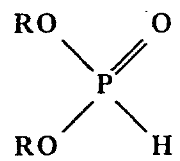

in der
R = $CH_3$ oder $C_2H_5$ ist, mit Schwefel und einer wasserfreien Base in einem organischen Lösungsmittel umgesetzt und aus der Reaktionslösung durch Extraktion mit Kalium- oder Natriumhydroxid in Wasser das Salz der Formel (II) gewonnen.

Das Salz der Formel (II) befindet sich dann in der wäßrigen Phase und die Base im organischen Lösungsmittel. Nach Phasentrennung, Nachwaschen mit Wasser und Trocknung kann die organische Phase erneut eingesetzt werden.

Als Base werden solche Stoffe eingesetzt, die in organischen Lösungsmitteln löslich sind, vorzugsweise Amine wie Dimethylbenzylamin, Dimethylanilin oder Triethylamin, ganz besonders bevorzugt Dimethylbenzylamin.

Als »organische Lösungsmittel« kommen vorzugsweise billige organische Stoffe in Betracht wie Xylol oder Toluol, vorzugsweise Toluol.

In einer besonderen Ausführung dieses Prozesses wird die Herstellung kontinuierlich z. B. in einer dreistufigen Kesselkaskade durchgeführt. Die Reaktionstemperatur beträgt 40–80° C, vorzugsweise 45–65° C.

Die zweite Ausgangsverbindung der Formel (III) in der Y für eine Abgangsgruppe vorzugsweise Chlorid oder Bromid und R′ für H oder Alkyl, vorzugsweise Methyl steht, können am einfachsten durch Umsetzung der entsprechenden Alkohole mit einem Halogenisierungsmittel erhalten werden (vgl. Houben–Weyl, Bd. 5/3).

In einer speziellen Herstellungsvariante, die mit zur Erfindung gehört, wird als Halogenisierungsmittel Chlorwasserstoff-Gas verwendet.

Dieses wird in den vorgewärmten Alkohol bei 45–100° C eingeleitet und nach beendeter Einleitung noch bei 70–95° C nachgerührt. Anschließend wird die Reaktionslösung, die aus einer organischen Oberphase und einer wäßrigen Unterphase besteht (Phasenverhältnis 3–5 zu 1), ohne Aufarbeitung komplett in die Endstufe eingesetzt.

Der Chlorwasserstoff wird in geringem Überschuß bezogen auf den Alkohol eingesetzt, vorzugsweise (1,05–1,3 Mol-Äquivalente).

Bei der Umsetzung zum Endprodukt der Formel (I) wird das in Stufe 1 gewonnene Salz der Formel (II) mit der in Stufe 2 erhaltenen Verbindung der Formel (III) umgesetzt.

In Formel (I) steht R für Alkyl, vorzugsweise für Methyl oder Ethyl, X für Sauerstoff oder Schwefel und R′ für Wasserstoff oder Alkyl, vorzugsweise für Wasserstoff und Methyl.

Die Konzentration des eingesetzten Salzes der Formel (II) sollte zwischen 20–40% im Reaktionsgemisch zu Beginn der Reaktion betragen, was man am einfachsten dadurch erreicht, daß man das Thio- bzw. Dithiophosphat der Formel (II) ca. 25–38%ig im Verdünnungsmittel vorlegt und die Verbindung der Formel (III) anschließend dazu gibt.

Die Reaktionstemperatur liegt zwischen 45 und 65° C, vorzugsweise zwischen 55 und 65° C.

Der Druck entspricht Atmosphären-Druck. Die Reaktionsmischung muß durchgerührt werden.

Bei der Durchführung des erfindungsgemäßen Verfahrens setzt man auf 1 Mol der Verbindung der Formel (III) 1,0 bis 1,02 Mol der Verbindung der Formel (II) ein.

Die Reaktionslösung ist heterogen, d. h. eine wäßrige Phase wird mit einer organischen Phase vermischt. In bestimmten Fällen ist es günstig, die Verbindungen der Formel (III) mit einem organischen Lösungsmittel wie z. B. Xylol oder Toluol zu verdünnen, um damit die organische Phase im Reaktionsgemisch zu vergrößern.

Man erhält dann das Reaktionsprodukt überwiegend in der organischen Phase, so daß Folgereaktionen in der polaren Phase vermindert werden.

Im allgemeinen bildet am Ende der Reaktion das Reaktionsprodukt die organische Phase. Diese wird abgetrennt und Reste durch Extraktion mit einem unpolaren Stoff aus der polaren Phase gewonnen.

## Beispiel 1

### Herstellung von Dimethylthiophosphorsäure-Natrium-Salzlösung

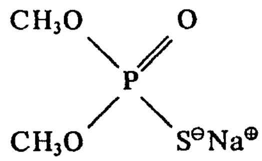

Einsätze:

137,7 g Dimethylbenzylamin (1,02 Mol)
320 ml Xylol
33,6 g Schwefel (1,05 Mol)
110 g Dimethylphosphit (1,0 Mol)
168 g Natronlauge (1,05 Mol)

Xylol, Dimethylbenzylamin und Schwefel werden in einer Rührapparatur vorgelegt. Es wird ein Vakuum von ca. 70 mbar angelegt. Man gibt zunächst soviel Dimethylphosphit hinzu bis ca. 45°C erreicht (ca. 10 g). Dann wird weiter bei 45—50°C unter Siedekühlung Dimethylphosphit bei 70 mbar so schnell wie möglich eingetropft. Nach beendeter Zugabe wird ca. 30 min nachgerührt, wobei die Lösung auf ca. 30—40°C abkühlt. Ist noch Schwefel vorhanden, wird dieser abfiltriert. Dann gibt man die Natronlauge zügig zu und läßt einige Minuten durchrühren.

Man trennt anschließend die Phasen, wäscht die wäßrige Phase 1 × mit 80 ml Xylol und gibt das Xylol zur organischen Phase, die man nach Waschung mit Wasser und azeotroper Trocknung erneut einsetzen kann.

Die wäßrige Phase wird gewogen und der Gehalt z. B. durch Hochdruckflüssigkeitschromatographie bestimmt. Ausbeute 98—100% der Theorie.

Der Gehalt des Salzes in Wasser liegt zwischen 50—55% der pH sollte zwischen 11,5—13,5 betragen.

Alternativen:

1. Statt Dimethylbenzylamin können auch andere Amine wie z. B. Triethylamin, Dimethylamin oder Anilin eingesetzt werden.
2. Die Reaktionstemperatur kann auch höher als 45—50°C gewählt werden, wodurch z. B. eine kontinuierliche Herstellung in einer zwei- oder dreistufigen Kesselkaskade, z. B. bei 60°C, interessant wird.
3. Xylol ist durch andere Lösungsmittel wie z. B. Toluol ersetzbar, Natronlauge z. B. durch Kalilauge.

## Beispiel 2

### Herstellung von 2-(Ethylmercapto)-ethylchlorid

$ClCH_2CH_2SCH_2CH_3$

Einsätze:

106 g 2-(Ethylmercapto)-ethanol (1 Mol)
42 g Chlorwasserstoff-Gas (1,15 Mol)

In einer Rührapparatur wird 2-(Ethylmercapto)-ethanol bei 85°C vorgelegt und anschließend innerhalb 45 Minuten HCl-Gas bei gleicher Temperatur eingeleitet.

Dann wird noch 25 Minuten bei 85°C nachgerührt und die Lösung abgekühlt auf Raumtemperatur. Man erhält ca. 121 g Oberphase (99% 2-(Ethylmercapto)-ethylchlorid) sowie ca. 27 g Unterphase, die noch ca. 3 g Produkt enthält, neben Reaktionswasser (18 g) und Salzsäureüberschuß (5,5 g).

Die Ausbeute (Produkt Ober + Unterphase) beträgt 99% der Theorie.

Die Reaktionslösung wird direkt weiter eingesetzt (siehe Beispiel 3).

Alternativen:

Die Reaktionstemperatur kann in weiten Grenzen variiert werden (45—100°C) und entsprechend die HCl-Gas-Dosierung verkürzt oder gedehnt werden.

### Beispiel 2a

Wie Beispiel 2 jedoch wird HCl-Gas innerhalb 3 Stunden bei 45° C eingeleitet und dann noch 45 Minuten bei 70° C gerührt.

### Beispiel 3

Herstellung von O,O-Dimethyl-S-2-(ethylmercapto)-ethylthiophosphat

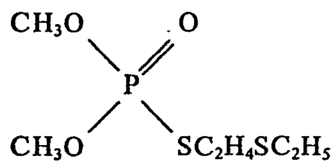

Einsätze:

1) Reaktionslösung aus Beispiel 2
2) 162,4 g Dimethylthiophosphorsäure-Natrium-Salz, 33%ig in Wasser (0,99 Mol) (Reaktionslösung aus Beispiel 1 verdünnt mit Wasser)

In eine Rührapparatur wird die Natrium-Salzlösung vorgelegt und die untere Phase der Reaktionslösung aus Beispiel 2 (überwiegend wäßrige Salzsäure) so zugegeben, daß ein pH-Wert von 6 nicht unterschritten wird. (Zugabe von 30%iger Natronlauge.) Dann wird die Oberphase bei pH 6,5 zudosiert. Man erwärmt die Mischung auf 55° C 50 Min. lang, wobei der pH-Wert bei 6,5 gehalten wird. Anschließend werden die Phasen getrennt und die wäßrige Phase 3× mit je 10 Vol-% Xylol nachextrahiert. Die organischen Phasen werden vereinigt, nochmals vom Wasser getrennt und im Vakuum eingeengt.
Ausbeute: 93% der Theorie. Gehalt nach GC: 96–99%ig.

### Beispiel 4

Herstellung von 2-(Ethylmercapto)-isopropylchlorid

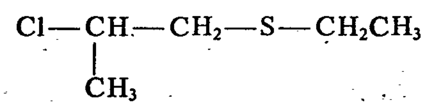

Einsätze:

120 g 2-Ethylmercapto-1-methyl-ethanol (1 Mol)
42 g Chlorwasserstoff-Gas (1,15 Mol)

In einer Rührapparatur wird der Alkohol bei 70–75°C vorgelegt und HCl-Gas bei gleicher Temperatur innerhalb 40 Minuten eingeleitet und anschließend 30 Minuten bei 80–85°C nachgerührt.
Die zweiphasige Reaktionslösung wird so weiterverarbeitet (siehe Beispiel 5).
Ausbeute an 2-(Ethylmercapto)-isopropylchlorid (Ober- und Unterphase) > 99% der Theorie.

| | |
|---|---|
| Gewicht der Oberphase: | 138 g |
| Gewicht der Unterphase: | 24 g |

Beispiel 5

Herstellung von O,O-Dimethyl-S-[(2-ethylmercapto)-1-methyl-ethyl]thiophosphat

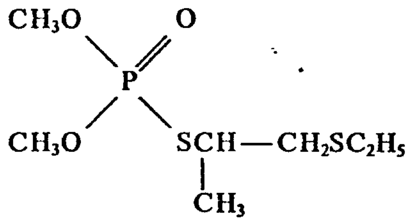

Einsätze:

1) Reaktionslösung aus Beispiel 4
2) 167 g Dimethylthiophosphorsäure-Natrium-Salz, 30%ig in Wasser (1,02 Mol) Reaktionslösung aus Beispiel 1 verdünnt mit Wasser

Die Arbeitsweise ist die gleiche wie in Beispiel 3 mit dem Unterschied, daß die Reaktionszeit 1,5 Stunden und die Reaktionstemperatur 65° C beträgt.

Ausbeute: 95% der Theorie. Gehalt ca. 98% nach GC.

**Patentansprüche**

1. Verfahren zur Herstellung der Verbindungen der Formeln (I)

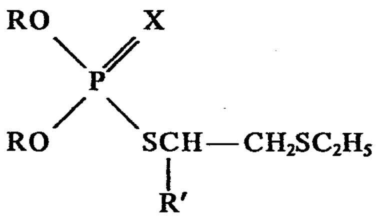 bzw. 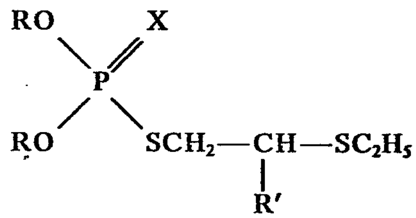 (I)

in denen

R = Alkyl, insbesondere Methyl oder Ethyl,
X = Sauerstoff oder Schwefel und
R' = Wasserstoff oder Alkyl, insbesondere Wasserstoff oder Methyl bedeutet

durch Umsetzung der Verbindungen der Formel (II)

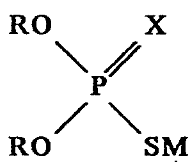 (II)

in der

R für Alkyl, insbesondere Methyl oder Ethyl,
X für Sauerstoff oder Schwefel und
M für ein Kation — ausgenommen $NH_4^{\oplus}$ — steht, mit Verbindungen der Formel (III)

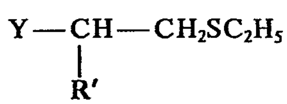 bzw. 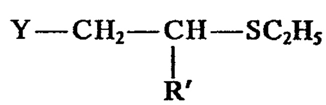 (III)

in denen

Y eine Abgangsgruppe insbesondere Chlorid oder Bromid und
R' Wasserstoff oder Alkyl, insbesondere Wasserstoff oder Methyl bedeuten,

dadurch gekennzeichnet, daß man auf 1 Mol der Verbindung der Formel III 1,0 bis 1,02 Mol der Verbindung der Formel II einsetzt und die Umsetzung bei Temperaturen zwischen 45 und 65° C und

einem pH-Wert zwischen 5,0 und 7,5 in einem Wasser enthaltenden heterogenen Reaktionsmedium vornimmt.

2. Verfahren nach Anspruch 1, dadurch gekennzeichnet, daß die Verbindungen der Formel (II) 20–40%ig im Reaktionsmedium zu Beginn der Reaktion vorliegen.

3. Verfahren nach Anspruch 1, dadurch gekennzeichnet, daß man die Verbindungen der Formel (II) in denen R = Methyl oder Ethyl, X = O und M = Kalium oder Natrium ist, durch Umsatz von Dimethyl- oder Diethylphosphit mit Schwefel in Gegenwart einer organischen Base in einem organischen Lösungsmittel und anschließender Extraktion mit wäßriger Natron- oder Kalilauge herstellt.

4. Verfahren nach Anspruch 3, dadurch gekennzeichnet, daß man die Reaktion bei 55 bis 65°C durchführt.

5. Verfahren nach Anspruch 3, dadurch gekennzeichnet, daß man als organisches Lösungsmittel Toluol oder Xylol und als organische Base Dimethylbenzylamin einsetzt.

6. Verfahren nach Anspruch 3, dadurch gekennzeichnet, daß man die Reaktion kontinuierlich in einer mehrstufigen Kesselkaskade durchführt.

7. Verfahren nach Anspruch 1, dadurch gekennzeichnet, daß man die Verbindungen der Formel (III), in denen Y = Chlorid und R' = H oder $CH_3$ ist, durch Umsetzung der entsprechenden Alkohole, d. h. Y = OH, mit Chlorwasserstoff-Gas bei 45–100°C herstellt, indem das Gas in den vorgewärmten Alkohol eingeleitet wird.

8. Verfahren nach Anspruch 7, dadurch gekennzeichnet, daß die Reaktionslösung ohne Aufarbeitung direkt weiter umgesetzt wird.

**Claims**

1. Process for the preparation of the compounds of the formulae (I)

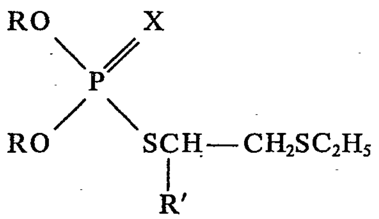

or

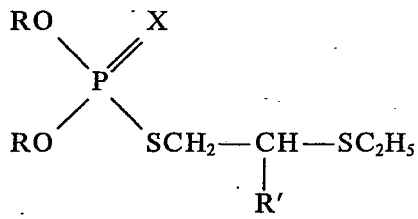

(I)

in which

R denotes alkyl, in particular methyl or ethyl,
X denotes oxygen or sulphur and
R' denotes hydrogen or alkyl, in particular hydrogen or methyl,

by reacting the compounds of the formula (II)

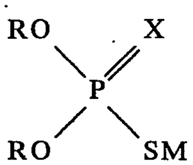

(II)

in which

R represents alkyl, in particular methyl or ethyl,
X represents oxygen or sulphur and
M represents a cation, with the exception of $NH_4^{\oplus}$,

with compounds of the formula (III)

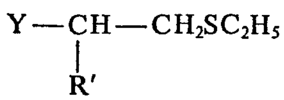

or

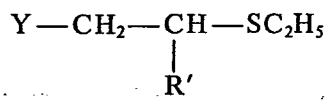

(III)

in which

Y denotes a leaving group, in particular chloride or bromide, and
R' denotes hydrogen or alkyl, in particular hydrogen or methyl,

characterised in that 1.0 to 1.02 mols of the compound of the formula II is used per mol of the compound of the formula III and the reaction is carried out at temperatures between 45 and 65°C and at a pH value between 5.0 and 7.5 in a heterogeneous reaction medium containing water.

2. Process according to claim 1, characterised in that the compounds of the formula (II) are present in the reaction medium in a concentration of 20–40% strength at the start of the reaction.

3. Process according to claim 1, characterised in that the compounds of the formula (II) in which R is methyl or ethyl, X is O and M is potassium or sodium are prepared by reaction of dimethyl or diethyl phosphite with sulphur in the presence of an organic base in an organic solvent and subsequent extraction with aqueous sodium hydroxide solution or potassium hydroxide solution.

4. Process according to claim 3, characterised in that the reaction is carried out at 55 to 65°C.

5. Process according to claim 3, characterised in that toluene or xylene is employed as the organic solvent and dimethylbenzylamine is employed as the organic base.

6. Process according to claim 3, characterised in that the reaction is carried out continuously in a multistage cascade of kettles.

7. Process according to claim 1, characterised in that the compounds of the formula (III) in which Y is chloride and R′ is H or $CH_3$ are prepared by reacting the corresponding alcohols, that is to say Y=OH, with hydrogen chloride gas at 45–100°C, by passing the gas into the pre-warmed alcohol.

8. Process according to claim 7, characterised in that the reaction solution is further reacted directly, without working up.

**Revendications**

1. Procédé de préparation des composés répondant aux formules I

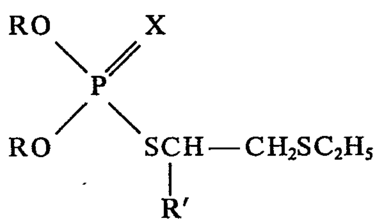 et 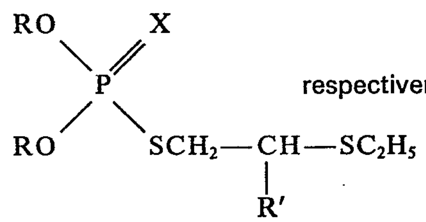 respectivement (I)

dans lesquelles

R représente un groupe alkyle, plus particulièrement méthyle et éthyle,
X représente l'oxygène ou le soufre,
R′ représente l'hydrogène ou un groupe alkyle, plus spécialement l'hydrogène ou un groupe méthyle,

par réaction des composés répondant à la formule (II)

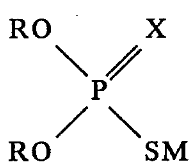 (II)

dans laquelle

R représente un groupe alkyle, plus particulièrement méthyle ou éthyle,
X représente l'oxygène ou le soufre,
M représente un cation — à l'exclusion de $NH_4^{\oplus}$ — avec les composés de formule (III)

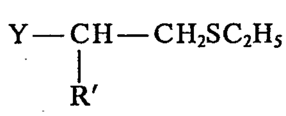 et 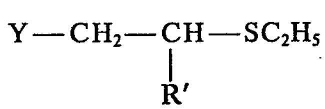 respectivement (III)

dans laquelle

Y représente un groupe éliminable, plus particulièrement chlorure ou bromure et,
R′ représente l'hydrogène ou un groupe alkyle, plus spécialement l'hydrogène ou le groupe méthyle,

caractérisé en ce que, pour 1 mole du composé de formule III, on utilise 1,0 à 1,02 mole du composé de formule II et on effectue la réaction à des températures de 45 à 65°C et à un pH de 5,0 à 7,5 dans un milieu de réaction hétérogène contenant de l'eau.

2. Procédé selon la revendication 1, caractérisé en ce que les composés de formule II sont contenus à une concentration de 20 à 40% dans le milieu de réaction au début de la réaction.

3. Procédé selon la revendication 1, caractérisé en ce que l'on prépare les composés de formule II pour lesquels R représente un groupe méthyle ou éthyle, X représente O et M représente le potassium ou le sodium, par réaction du phosphite de diméthyle ou de diéthyle avec le soufre en présence d'une base organique dans un solvant organique en faisant suivre d'une extraction par la lessive de soude ou de potasse.

4. Procédé selon la revendication 3, caractérisé en ce que l'on effectue la réaction à une température de 55 à 65° C.

5. Procédé selon la revendication 3, caractérisé en ce que l'on utilise en tant que solvant organique le toluène ou le xylène et en tant que base organique la diméthylbenzylamine.

6. Procédé selon la revendication 3, caractérisé en ce que l'on effectue la réaction en continu dans une série de réacteurs à plusieurs étages.

7. Procédé selon la revendication 1, caractérisé en ce que l'on prépare les composés de formule III pour lesquels X représente un chlorure et R' représente H ou $CH_3$ par réaction des alcools correspondants, c'est-à-dire que Y représente OH, avec le chlorure d'hydrogène gazeux à une température de 45 à 100° C, en injectant le gaz dans l'alcool chauffé au préalable.

8. Procédé selon la revendication 7, caractérisé en ce que l'on soumet directement la solution de réaction, sans la traiter, à la réaction suivante.